# EUROPEAN PATENT SPECIFICATION

(11) **EP 3 206 035 B1**
(45) Date of publication and mention of the grant of the patent: **26.02.2025**
(21) Application number: 14905750.7
(22) Date of filing: 11.11.2014
(51) Int. Cl.: G01N 35/00

(54) **AUTOMATIC ANALYSIS SYSTEM**
AUTOMATISCHES ANALYSESYSTEM
SYSTÈME D'ANALYSE AUTOMATIQUE

(43) Date of publication of application: 16.08.2017
(73) Proprietor: Shimadzu Corporation, Kyoto-shi, Kyoto 604-8511 (JP)
(72) Inventor: SUDO Tomokazu, Kyoto-shi Kyoto 604-8511 (JP)
(74) Representative: Mewburn Ellis LLP
(86) International application number: PCT/JP2014/079834
(87) International publication number: WO 2016/075755

(56) References cited:
- JP-A- 2001 349 897
- JP-A- 2003 066 050
- JP-A- 2004 028 933
- JP-A- 2005 241 612
- JP-A- 2008 292 328
- JP-A- 2012 137 409
- JP-A- H10 282 110
- US-A1- 2004 096 361

## Description

### TECHNICAL FIELD

The present invention relates to an automatic analysis system configured by coupling a plurality of automatic analysis devices.

### BACKGROUND ART

An automatic analysis device is configured to automatically sample a specimen contained in a container, and to perform analysis. Such an automatic analysis device may include, as mechanisms for conveying a specimen, mechanisms such as a conveyor belt for conveying a specimen rack holding a plurality of specimen containers and placed on the conveyor belt, an arm for pulling the specimen rack conveyed to a predetermined position by the conveyor belt from the conveyor belt into the device, and the like (for example, see Patent Document 1).

Such an automatic analysis device includes, at a beginning side of the conveyor belt, an installation section where a specimen rack is to be installed by an operator, and includes, at an end side, a specimen rack recovery section for recovering a specimen rack for which sampling has been completed. When an operator installs a specimen rack on the installation section, the specimen rack is conveyed by the conveyor belt and is pulled into the device at a predetermined position by the arm, and sampling of a specimen is performed. The specimen rack for which sampling is completed is returned by the arm onto the conveyor belt, and is conveyed by the conveyor belt to the specimen rack recovery section at the end side and is recovered.

### PRIOR ART DOCUMENTS

### PATENT DOCUMENTS

Patent Document 1: Japanese Patent Laid-open Publication No. 2011-185893
Patent Document 2: Japanese Patent Laid-open Publication No. 9-54096
US 2004/096361 A1 discloses a further known automatic analysis system.

### SUMMARY OF THE INVENTION

### PROBLEMS TO BE SOLVED BY THE INVENTION

Because there is a limit on the number of analysis items that can be processed by one automatic analysis device, if there are a large number of specimens to be analyzed, it takes a long time to analyze all the specimens. Further, in the case where a plurality of analysis items have to be performed on one specimen, one automatic analysis device may not be able to perform all the analysis items. In such a case, a specimen container containing the specimen is installed in one automatic analysis device and sampling is performed by the automatic analysis device, and then, an operator has to remove the specimen rack for which sampling has been completed from a recovery section of the automatic analysis device and to install the specimen rack in another automatic analysis device.

Furthermore, in the case where one automatic analysis system is constructed by a plurality of automatic analysis devices, depending on the number of specimens to be analyzed or an analysis schedule, a plurality of automatic analysis devices are preferably operated so as to process a plurality of specimens simultaneously in parallel to thereby increase the analysis efficiency, or one automatic analysis device is preferably operated alone while stopping other automatic analysis devices. However, management information about which reagent is installed at which position in which device and which analysis item can be performed is different between a case where a plurality of automatic analysis devices are to be operated at the same time and a case where only one of the automatic analysis devices is to be operated, and the management information has to be acquired and reset at the time of switching between a state where a plurality of automatic analysis devices are to be operated and a state where one automatic analysis device is to be operated alone, and time is thus required.

Accordingly, the present invention has its object to enable, with respect to an automatic analysis device where a plurality of automatic analysis devices are coupled, swift switching between a state where analyses are to be performed by operating a plurality of automatic analysis devices and a state where an analysis is to be performed by operating one automatic analysis device.

### SOLUTIONS TO THE PROBLEMS

A mode of an automatic analysis system according to the present invention includes an analysis device group including a plurality of automatic analysis devices, a specimen transport device, mode switching means, an assignment information holding section, analysis item setting means, and analysis item execution means. Each automatic analysis device constituting the analysis device group includes a conveying section for conveying a specimen container containing a specimen, a reagent table on which a plurality of reagent containers containing reagents are to be installed, an analysis operation section for collecting a specimen from a specimen container conveyed by the conveying section to a predetermined position, and for performing analysis by adding a reagent, among reagents installed on the reagent table, to the specimen, a power supply device for supplying necessary power to the conveying section and the analysis operation section, and an analysis control section for controlling operation of the conveying section and the analysis operation section. The specimen transport device couples two automatic analysis devices that are adjacent to each other, and transports a specimen container between the automatic analysis devices. The mode switching means selects, and switches to, one of a multi-operation mode in which a plurality of automatic analysis devices that are coupled to each other by the specimen transport device are placed in an operation state and a single operation mode in which only one automatic analysis device is placed in the operation state.

The assignment information holding section holds analysis item assignment information assigned in advance to each automatic analysis device as an analysis item to be performed by each automatic analysis device in the analysis device group in each of the multi-operation mode and the single operation mode. The analysis item setting means sets, in each of the modes, an analysis item, among analysis items assigned to each automatic analysis device, as an analysis item to be performed on an analysis target specimen, based on the analysis item assignment information held in the assignment information holding section. The analysis item execution means supplies information about the analysis item set by the analysis item setting means to the analysis control section of each automatic analysis device, and causes the analysis item to be performed on a specimen on which the analysis item is to be performed.

### EFFECTS OF THE INVENTION

The automatic analysis system according to the present invention includes the analysis device group including a plurality of automatic analysis devices, and each automatic analysis device in the analysis device group includes the conveying section, the reagent table, the analysis operation section, the power supply device, and the analysis control section, and thus, each automatic analysis device may be operated alone to perform analysis of a specimen. Moreover, provided is the mode switching means for selecting, and switching to, one of the multi-operation mode in which a plurality of automatic analysis devices are operated at the same time and the single operation mode in which only a specific automatic analysis device is operated, and an analysis item, among a plurality of analysis items assigned to each automatic analysis device, is performed in each mode on an analysis target specimen based on the analysis item assignment information set in advance, and thus, switching between the multi-operation mode and the single operation mode may be easily and swiftly performed.

### BRIEF DESCRIPTION OF THE DRAWINGS

Fig. 1 is a perspective view showing automatic analysis devices and a specimen transport device according to an embodiment of an automatic analysis system.
Fig. 2 is a plan view schematically showing the automatic analysis devices and the specimen transport device according to the embodiment.
Fig. 3 is a block diagram showing an entire configuration according to the embodiment.
Fig. 4 is a flowchart showing an example flow from setting of an operation mode to analysis start according to the embodiment.
Fig. 5 is a flowchart showing an example flow from switching of an operation mode to analysis start according to the embodiment.
Fig. 6 is a perspective view of a transport mechanism of the specimen transport device according to the embodiment.
Fig. 7 is a side view of the transport mechanism.
Fig. 8 is an exploded perspective view of the transport mechanism seen from obliquely above.

### EMBODIMENTS OF THE INVENTION

According to a mode of the present invention, a reagent which is common with a reagent installed on a reagent table of another automatic analysis device is installed on the reagent table of one automatic analysis device which is to be operated in a single operation mode, and an analysis item which uses the common reagent is preferably assigned to the other automatic analysis device in a multi-operation mode, and to the one automatic analysis device in the single operation mode. This allows an analysis item which was performed in the multi-operation mode by an automatic analysis device which is placed in a suspended state in the single operation mode to be performed by the one automatic analysis device which is operated in the single operation mode, and thus, occurrence of an analysis item which cannot be performed in the single operation mode may be prevented.

A system control section that is electrically connected to an analysis control section of each automatic analysis device, and that manages operation of each automatic analysis device is further provided, and mode selection means, an assignment information holding section, analysis item setting means, and analysis item execution means are provided to the system control section. According to such a mode, all the automatic analysis devices may be integrally managed by the system control section, and management of the automatic analysis system by an operator is facilitated.

An information display section that is electrically connected to the system control section, and that displays information output from the system control section is further provided, and the mode switching means displays, on the information display section, a mode selection screen urging an operator to select one of the multi-operation mode and the single operation mode, and causes the operator to select one of the multi-operation mode and the single operation mode on the mode selection screen. An operator may thereby perform switching between the multi-operation mode and the single operation mode on a display screen of the information display section, and switching of the modes is facilitated.

Preferably, the analysis control section of each automatic analysis device also controls supply of power from a power supply device to a conveyor belt and an analysis operation section, and the system control section further includes non-operating device suspending means for supplying a signal for placing an automatic analysis device, other than an automatic analysis device that is to be placed in an operation state, in a suspended state in which supply of power from the power supply device to the conveying section and the analysis operation section is cut off, to the analysis control section of a corresponding automatic analysis device. An automatic analysis device which is not scheduled to be operated is thereby automatically placed in the suspended state, and wasteful consumption of power and the like may be proposed.

According to a preferred mode of the present invention, the conveying section provided to each automatic analysis device is a conveyor belt that includes a beginning and an end, and that conveys a specimen container in one direction from a beginning side to an end side, and two automatic analysis devices that are adjacent to each other are arranged in such a way that the end of the conveyor belt of one automatic analysis device is close to and faces the beginning of the conveyor belt provided to the other automatic analysis device, and a specimen transport device includes a transport mechanism that is arranged between the conveyor belts of the two automatic analysis devices that are adjacent to each other, and that holds a specimen container which reached the end of one conveyor belt and transports the specimen container to the beginning of the other conveyor belt. According to such a configuration, the size of the entire analysis system may be reduced.

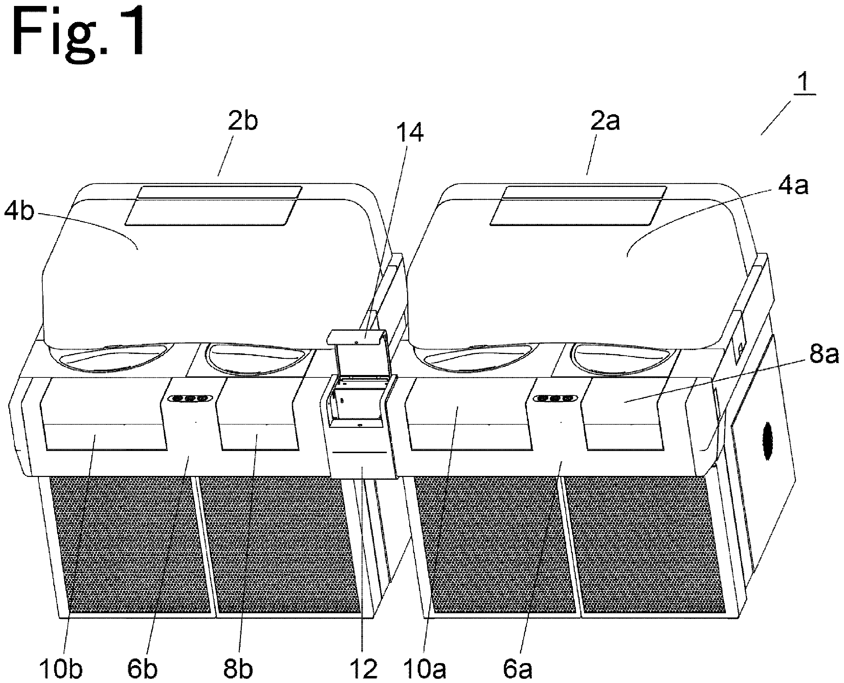

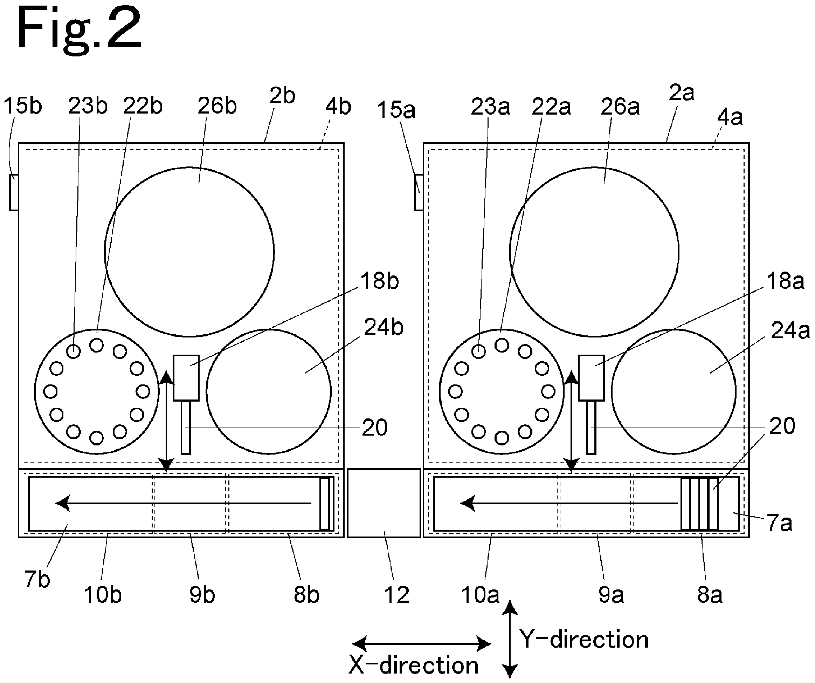

An embodiment of the automatic analysis system will be described with reference to Figs. 1 and 2. Figs. 1 and 2 show two automatic analysis devices constituting the automatic analysis system, and a specimen transport device coupling the automatic analysis devices. A control device for managing the operation of these devices will be described later.

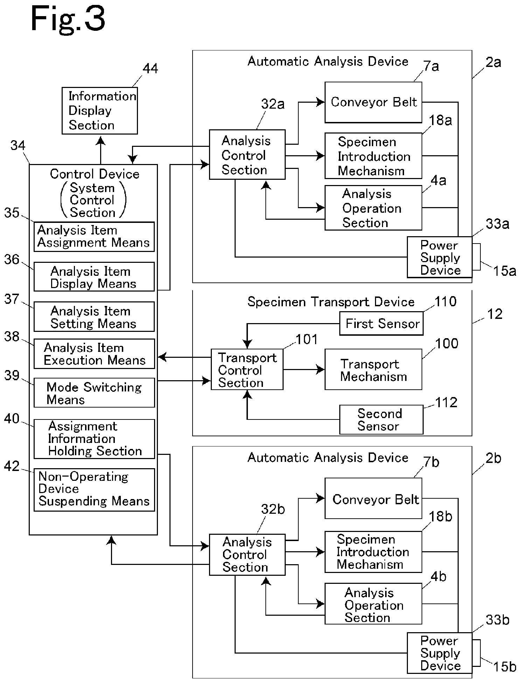

An automatic analysis system 1 is configured by an analysis device group including two automatic analysis devices 2a, 2b, a specimen transport device 12, and a control device 34 (see Fig. 3) connected to these devices 2a, 2b, 12. The two automatic analysis devices 2a, 2b constituting the analysis device group are arranged next to each other in an X-direction, which is one direction on a horizontal plane, and conveying sections 6a and 6b of the respective automatic analysis devices 2a, 2b are coupled to each other by the specimen transport device 12. In the present embodiment, although the analysis device group is configured by the two automatic analysis devices 2a and 2b, the analysis device group may alternatively be configured by three or more automatic analysis devices. In the case of configuring the analysis device group by coupling n (n ≥ 3) automatic analysis devices in series, n-1 specimen transport devices 12 become necessary.

The automatic analysis device 2a includes an analysis operation section 4a, a conveying section 6a, and a specimen introduction mechanism 18a. The automatic analysis device 2b likewise includes an analysis operation section 4a, a conveying section 6a, and a specimen introduction mechanism 18a. The automatic analysis device 2a and the automatic analysis device 2b include respective power supply devices 33a, 33b (see Fig. 3), and an operator may turn on/off power of each device 2a, 2b by a power switch 15a, 15b. The automatic analysis devices 2a and 2b may operate independently of each other, and even if power of one of the automatic analysis devices is turned off, analysis operation may be performed by the other automatic analysis device.

The automatic analysis devices 2a and 2b are devices having the same configuration. The configuration of the automatic analysis device 2a will be described. The conveying section 6a includes a conveyor belt 7a for conveying a specimen rack 20 holding a specimen container in one direction in the X-direction (the direction of right to left in Figs. 1 and 2). The surrounding portion of the conveyor belt 7a is covered by a cover. A specimen rack placement section 8a is provided on the beginning side of the conveying section 6a (the right side in Figs. 1 and 2), and a specimen rack recovery section 10a is provided on the end side (the left side in the drawings). Covers of the specimen rack placement section 8a and the specimen rack recovery section 10a can be opened/closed, and an operator may open the cover of the specimen rack placement section 8a and arrange a specimen rack on the conveyor belt 7a, or may open the cover of the specimen rack recovery section 10a and take out a specimen rack for which sampling is completed.

The specimen introduction mechanism 18a moves in a Y-direction orthogonal to the X-direction on the horizontal plane, and holds a specimen rack 20 on the conveyor belt 7a and introduces the specimen rack 20 to the side of the analysis operation section 4a, or returns a specimen rack 20 for which sampling has been completed onto the conveyor belt 7a. A specimen rack introduction section 9a is provided between the specimen rack placement section 8a and the specimen rack recovery section 10a of the conveying section 6a. Although not shown, a stopper for stopping a specimen rack 20 conveyed by the conveyor belt 7a and for releasing the stopped specimen rack 20 is provided to the specimen rack introduction section 9a. The specimen introduction mechanism 18a holds the specimen rack 20 stopped at a predetermined position by the stopper, and transfers the specimen rack 20 into the analysis operation section 4a. Further, the specimen introduction mechanism 18 returns, at the specimen rack introduction section 9a, onto the conveyor belt 7a, a specimen rack 20 in which the processing at the analysis operation section 4a is completed.

The analysis operation section 4a includes, in addition to a specimen collection mechanism (not shown) including, for example, a suction probe for collecting a specimen from a specimen container transferred by the specimen introduction mechanism 18a, a reagent installation section 22a, a specimen rack housing section 24a, and a measurement section 26a. A plurality of specimen racks 20 transferred from the conveyor belt 7a by the specimen introduction mechanism 18a are housed in the specimen rack housing section 24a. The specimen rack housing section 24a is a turntable, and places a specimen container on a specimen rack 20 at a predetermined position where a specimen is collected by the suction probe.

A plurality of reagent holders 23a for installing reagent containers containing reagents are provided to the reagent installation section 22a. Reagent information about a reagent container installed in each reagent holder 23a of the reagent installation section 22a is input to the control device 34 (see Fig. 3) by an operator inputting the reagent information about an installed reagent container to the control device 34 or by a bar code reader, as an information reader, reading information of a bar code which is an information medium attached to each reagent container, and what reagent is contained in which reagent holder 23a is registered in the control device 34.

A plurality of containers for mixing a specimen collected by the suction probe and a reagent are provided at the measurement section 26a, and reaction in a container is optically measured. According to such a configuration, at the analysis operation section 4a, a specimen rack 20 is housed in the specimen rack housing section 24a by the specimen introduction mechanism 18a, a specimen container held by the specimen rack 20 is placed at a predetermined position, and a specimen is collected by the suction probe. The collected specimen is injected into a container provided at the measurement section 26a, and after a reagent according to an analysis item is added by the suction probe, reaction between the specimen and the reagent is optically measured in terms of absorbance, fluorescence intensity, or the like.

The conveyor belt 7b of the automatic analysis device 2b is arranged on the same straight line as the conveyor belt 7a of the automatic analysis device 2a, and the beginning of the conveyor belt 7b is arranged facing the end of the conveyor belt 7a.

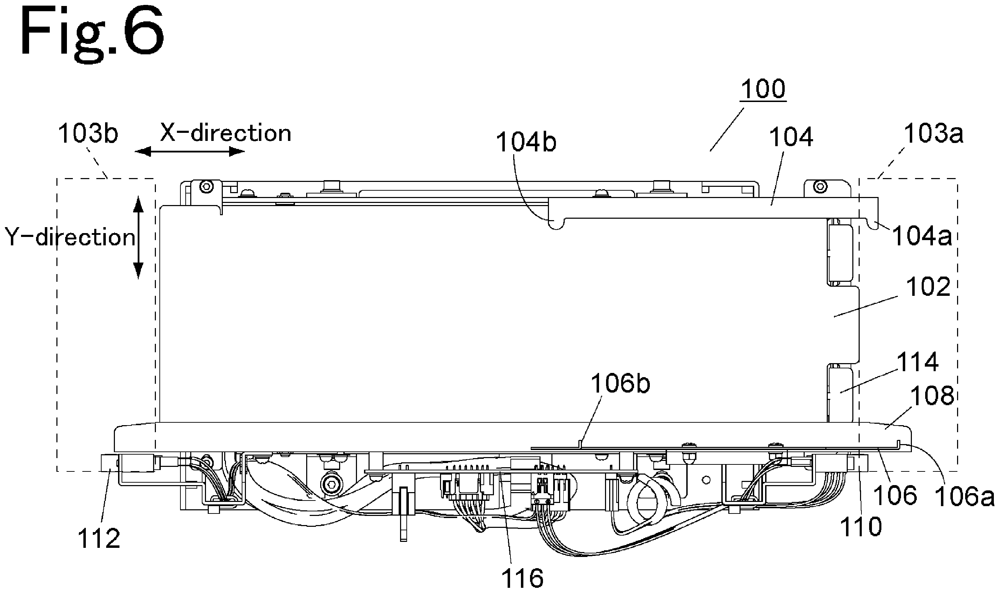

The specimen transport device 12 is arranged between the conveyor belts 7a and 7b, and couples the conveyor belts 7a and 7b. The specimen transport device 12 includes a transport mechanism 100 (see Figs. 6 to 8) for holding a specimen rack 20 which reached the end of the conveyor belt 7a and for placing the specimen rack 20 on the beginning of the conveyor belt 7b, and the transport mechanism is covered by an openable shielding cover 14. The specimen transport device 12 includes a first sensor 110 for detecting a specimen rack 20 which reached the end of the conveyor belt 7a, and a second sensor 112 for detecting a specimen rack 20 which reached the beginning of the conveyor belt 7b (see Figs. 6 to 8). When a specimen rack 20 is determined by the first sensor to have reached the end of the conveyor belt 7a, the specimen transport device 12 automatically starts transporting the specimen rack 20.

Next, a control system of the entire automatic analysis system 1 will be described with reference to Fig. 3.

The automatic analysis device 2a includes an analysis control section 32a for controlling the operation and managing the states of the analysis operation section 4a, the conveyor belt 7a, and the specimen introduction mechanism 18a, and a power supply device 33a for supplying necessary power to each part mentioned above. The power supply device 33a is provided with a power switch 15a, and switching between on and off of supply of power to the analysis operation section 4a, the conveyor belt 7a, the specimen introduction mechanism 18a, and the analysis control section 32a is performed by the power switch 15a.

In the same manner, the automatic analysis device 2b includes an analysis control section 32b for controlling the operation and managing the states of the analysis operation section 4b, the conveyor belt 7b, and the specimen introduction mechanism 18b, and a power supply device 33b for supplying necessary power to each part mentioned above. The power supply device 33b is provided with a power switch 15a, and switching between on and off of supply of power to the analysis operation section 4b, the conveyor belt 7b, the specimen introduction mechanism 18b, and the analysis control section 32b is performed by the power switch 15b.

The specimen transport device 12 includes the transport mechanism 100 for transporting a specimen rack, the first sensor 110 for detecting a specimen rack 20 which reached the end of the conveyor belt 7a, the second sensor 112 for detecting a specimen rack 20 which reached the beginning of the conveyor belt 7b, and a transport control section 101 for controlling the operation of the transport mechanism 100. Detection signals of the first sensor 110 and the second sensor 112 are captured by the control device 34 via the transport control section 101, and the transport state of a specimen rack 20 at the specimen transport device 12 is managed by the control device 34.

The analysis control sections 32a, 32b and the transport control section 101 are connected to the control device 34 by communication cables, and communication of information to/from the control device 34 is thereby performed. The control device 34 is a system control section for managing and controlling the entire automatic analysis system. The control device 34 may be realized by a computer dedicated to the automatic analysis system, or by a general-purpose personal computer.

The control device 34 includes analysis item assignment means 35, analysis item display means 36, analysis item setting means 37, analysis item execution means 38, mode switching means 39, an assignment information holding section 40, and a non-operating device suspending means 42.

The analysis item assignment means 35 allows an operator to perform setting regarding assignment of analysis items to be performed at each automatic analysis device 2a, 2b, or automatically performs setting based on information input from outside (for example, information recorded in a recording medium). Normally, mutually different analysis items are assigned to the automatic analysis devices 2a, 2b assuming that the analysis devices are to be operated at the same time so that throughput is increased with respect to analysis of a plurality of specimens. Accordingly, a reagent to be used for an analysis item to be performed at respective one of the automatic analysis devices 2a, 2b is installed in the reagent installation section 22a, 22b.

As the operation modes, two operation modes of a multi-operation mode and a single operation mode are prepared for the automatic analysis system. The multi-operation mode is a mode in which analyses are performed by operating both of the automatic analysis devices 2a, 2b, and the single operation mode is a mode in which an analysis is performed by operating one of the automatic analysis devices 2a, 2b. An operator is allowed to select one of the modes according to the number of specimens to be analyzed and the types thereof. In the single operation mode, only one automatic analysis device is operated, and thus, the one automatic analysis device 2a or 2b is preferably able to perform a large number of analysis items (i.e. analysis items for two devices). Accordingly, a reagent which is common with a reagent installed in the other automatic analysis device 2b or 2a has to be installed in the one automatic analysis device 2a or 2b which is to be operated in the single operation mode, and two types of analysis items for the multi-operation mode and the single operation mode have to be assigned to the automatic analysis device 2a or 2b which is to be operated in the single operation mode.

The analysis item assignment means 35 assigns analysis items to each automatic analysis device 2a, 2b for a case of the multi-operation mode and for a case of the single operation mode. Information about assignment of analysis items performed by the analysis item assignment means 35 is held in the assignment information holding section 40 as assignment information.

The mode switching means 39 is provided for switching between the operation modes. When switching of the operation mode is selected by an operator, the mode switching means 39 displays a mode selection screen on an information display section 44, and causes the operator to select one of the multi-operation mode and the single operation mode on the information display section 44.

A specimen which is introduced into the automatic analysis system is identified by reading a bar code attached to the specimen container, for example, and is managed in association with an analysis item which is to be performed on the specimen. The control device 34 controls the operation of the conveyor belt 7a, 7b and the transport mechanism 100 through the analysis control section 32a, 32b and the transport control section 101 in such a way that each specimen is introduced into the automatic analysis device 2a or 2b which is to perform a respective analysis item that is set.

In response to a request from an operator, the analysis item display means 36 displays, on the information display section 44, an analysis item that can be performed. The information display section 44 is, for example, a touch panel liquid crystal display device. The analysis item setting means 37 sets an analysis item selected by the operator from the analysis items displayed on the information display section 44 as an analysis item to be performed on a target specimen. The analysis item execution means 38 transmits information about the analysis item set by the analysis item setting means 37 to the automatic analysis device 2a or 2b for handling the analysis item so as to cause the analysis item to be performed.

At the time of, or after, installing a specimen container in the automatic analysis system, the operator causes analysis items which can be performed to be displayed on the information display section 44, and selects, on the information display section 44, an analysis item to be performed from the displayed analysis items. When an analysis item is selected by the operator, information about the analysis item and information about the installed specimen container are associated with each other, and are transmitted from the control device 34 to the automatic analysis device 2a, 2b. The automatic analysis device 2a, 2b performs the selected analysis item on the target specimen based on the pieces of information from the control device 34.

When the operation mode of the automatic analysis system is switched to the single operation mode, the non-operating device suspending means 42 transmits a signal, for achieving a suspended state, to an automatic analysis device which is not to be operated, and places the automatic analysis device in the suspended state. The suspended state is, for example, a state in which supply of power to a module other than modules which should be operated at all times is stopped. Modules which should be operated at all times include temperature adjustment elements, such as Peltier devices of the reagent installation sections 22a, 22b, which are necessary for keeping reagents at constant temperature, for example. The power consumption of an automatic analysis device which is placed in the suspended state is minimized, and also, consumption of cleaning liquid or ion exchange water which is constantly consumed in an operation state is suppressed.

Communication between an automatic analysis device in the suspended state and the control device 34 is cut off, and even if the power of the automatic analysis device is turned off by the power switch 15a or 15b, this is not recognized by the control device 34 as an error.

Furthermore, the non-operating device suspending means 42 may stop supply of power to the transport mechanism 100, the first sensor 110, and the second sensor 112 of the specimen transport device 12 when the operation mode is switched to the single operation mode. The power consumption at the time of the single operation mode may thereby be further reduced.

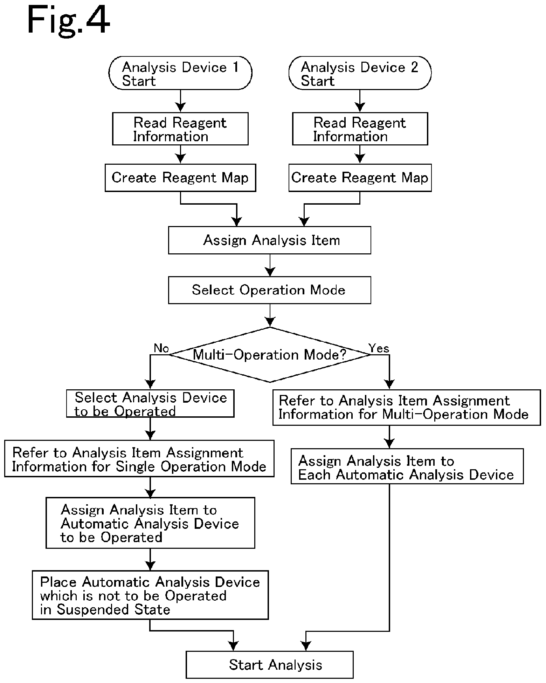

A flow from start of the automatic analysis system to analysis start will be described with reference to Fig. 3 and the flowchart in Fig. 4.

The automatic analysis device 2a (analysis device 1) and the automatic analysis device 2b (analysis device 2) are started, and reagent containers are installed in the reagent installation sections 22a, 22b of the respective analysis devices. An identifier (such as a bar code) including unique information is attached to the bottom surface of each reagent container, for example, and a reagent map is created when the identifier is read by a reader, such as a bar code reader, provided to each automatic analysis device 2a, 2b, and what reagent is installed in which of the reagent holding sections 23a, 23b of the reagent installation sections 22a, 22b is recognized by each automatic analysis device 2a, 2b and the control device 34. Then, an analysis item is assigned to each automatic analysis device 2a, 2b for a case of the multi-operation mode and for a case of the single operation mode. Information of the analysis item assigned to each automatic analysis device 2a, 2b is held in the assignment information holding section 40 as assignment information.

For example, in the case where there are analysis items A, B, C, D, E, and F, in the multi-operation mode, the analysis items A, B, and C are assigned to the automatic analysis device 2a, and the analysis items D, E, and F are assigned to the automatic analysis device 2b. On the other hand, in the single operation mode, the analysis items A, B, C, D, E, and F are assigned to the automatic analysis device 2a, and the analysis items D, E, and F are assigned to the automatic analysis device 2b. In this case, reagents to be used for the analysis items A, B, C, D, E, and F all have to be installed in the reagent installation section 22a of the automatic analysis device 2a. The reagents for the analysis items D, E, and F installed in the reagent installation section 22a of the automatic analysis device 2a are used only in the single operation mode, and are not used in the multi-operation mode. Additionally, all the reagents for the analysis items A, B, C, D, E, and F may also be installed in the reagent installation section 22b of the automatic analysis device 2b, and A, B, C, D, E, and F may also be assigned to the automatic analysis device 2b as the analysis items for the time of the single operation mode. This allows all the analysis items to be performed in the single operation mode regardless of which of the automatic analysis devices 2a, 2b is in the operation state.

Next, the mode switching means 39 causes the information display section 44 to display the mode selection screen, and causes the operator to select an operation mode.

In the case where the multi-operation mode is selected, analysis items to be performed are assigned to the automatic analysis devices 2a, 2b based on the assignment information held in the assignment information holding section 40. Then, when the operator installs a specimen and selects an analysis item to be performed on the specimen, the specimen is introduced into the automatic analysis device 2a or 2b to which the selected analysis item is assigned, and the analysis item is performed on the specimen.

In the case where the single operation mode is selected, a screen for allowing the operator to select the automatic analysis device 2a or 2b to be operated alone is displayed by the information display section 44, and one of the automatic analysis devices 2a, 2b to be operated is selected. When the automatic analysis device 2a or 2b to be operated is selected, an analysis item is assigned to the selected automatic analysis device 2a or 2b based on the assignment information held in the assignment information holding section 40. The non-operating device suspending means 42 transmits a signal for placing the other automatic analysis device 2b or 2a which was not selected by the operator in the suspended state to the corresponding automatic analysis device 2b or 2a. Then, when the operator installs a specimen in the automatic analysis device 2a or 2b which is to be operated alone, and selects an analysis item to be performed on the specimen, the selected analysis item is performed by the automatic analysis device 2a or 2b which is operated alone.

Additionally, in the present embodiment, although an operator is to select the automatic analysis device 2a or 2b which is to be operated alone in the single operation mode, the same automatic analysis device (for example, the automatic analysis device 2a) may be constantly set as the automatic analysis device to be operated alone in the single operation mode.

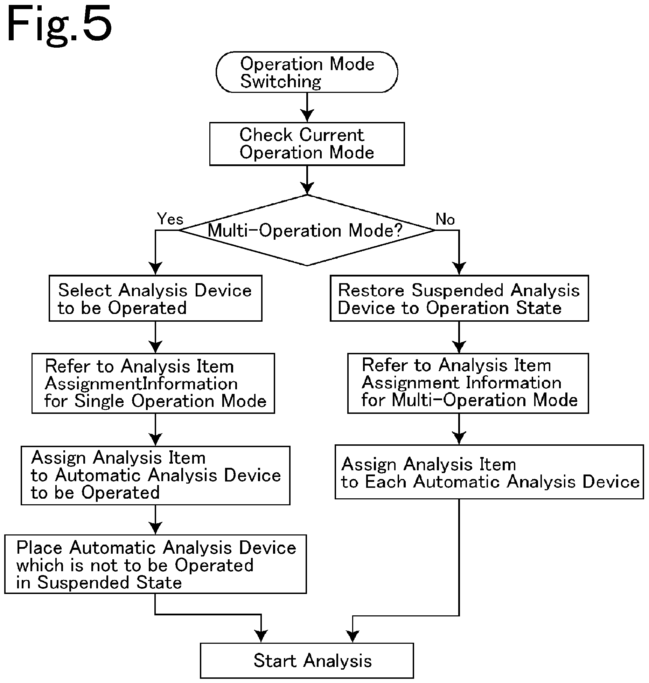

Next, a flow from switching of the operation mode to analysis start will be described with reference to Figs. 3 and 5.

According to the automatic analysis system, an operator is allowed to switch the operation mode at a desired timing. When switching of the operation mode is input to the control device 34 by an operator, the mode switching means 39 checks the current operation mode, and if the current operation mode is the multi-operation mode, selection of the automatic analysis device to be operated alone, setting of a reagent map to be used, extraction and setting of analysis items that can be performed, and placement of the automatic analysis device which is not to be operated in the suspended state are performed, and analysis in the single operation mode is started.

On the other hand, if the current operation mode is the single operation mode, a suspended automatic analysis device is restored to the operation state, and creation of a reagent map for the multi-operation mode, extraction of analysis items that can be performed, and setting of the automatic analysis devices which are to perform respective analysis items are performed, and analysis in the multi-operation mode is started. If the power of an automatic analysis device to be restored to the operation state is turned off at the time of switching of the operation mode from the single operation mode to the multi-operation mode, the information display section 44 preferably performs display urging the operator to turn on the corresponding automatic analysis device.

Next, an example of the transport mechanism 100 provided to the specimen transport device 12 will be described with reference to Figs. 6 to 8.

The transport mechanism 100 includes a table 102 having a horizontal plane. The table 102 is supported by a base 118. The horizontal plane of the table 102 is set to approximately the same height as the conveyance surfaces of the conveyor belts 7a, 7b arranged on both ends. The position near an end portion on one side of the table 102 in the X-direction (the right side in the drawing) is a conveyance start position 103a where conveyance of a specimen rack is started, and the end of the conveyor belt 7a on the former stage is arranged at the conveyance start position 103a. The position near an end on the other side of the table 102 in the X-direction (the left side in the drawing) is a conveyance end position 103b for a specimen rack, and the beginning of the conveyor belt 7b on the latter stage is arranged at the conveyance end position 103b.

An arm member 104 and an arm member 106 extending in the X-direction are arranged, facing each other, at both side edge portions of the table 102. The arm member 104 and the arm member 106 are driven in the X-direction and the Y-direction at the side edge portions of the table 102. The arm member 104 and the arm member 106 move at the same time in the same direction in coordination with each other with respect to the X-direction, and move in symmetrical directions around the table 102 in coordination with each other with respect to the Y-direction. Although not shown, mechanisms, such as motors, for driving the arm member 104 and the arm member 106 are housed inside the base 118.

The arm member 104 includes a protrusion 104a, which faces the inner side (the table 102 side in the Y-direction), at the end portion on the conveyance start position 103a side, and also includes a protrusion 104b, which faces the inner side, at the end portion on the transport end position 103b side. The protrusion 104a and the protrusion 104b protrude toward the table 102 side in the Y-direction. Recesses (not shown) are provided at a side surface of the specimen rack 20. The specimen rack 20 is placed on the table 20 with the recesses facing the outer side in the Y-direction. The protrusions 104a and 104b are fitted in the recesses of the specimen rack 20 to be engaged with the specimen rack. The arm member 104 is moved, in the Y-direction, between a position where the protrusions 104a, 104b are fitted in the recesses of the specimen rack and a position where the specimen rack itself is not contacted.

The arm member 106 includes a protrusion 106a, which faces the inner side (the table 102 side in the Y-direction), at the end portion on the conveyance start position 103a side, and also includes a protrusion 106b, which faces the inner side, on the transport end position 103b side. The protrusion 106a and the protrusion 106b are to engage with a rear surface (with respect to the traveling direction) of the specimen rack. The arm member 106 is moved, in the Y-direction, between a position where the protrusions 106a, 106b are engaged with the rear surface of the specimen rack and a position where the protrusions 106a, 106b do not contact with the specimen rack.

The arm members 104 and 106 configure a handler for transporting a specimen rack by holding the specimen rack and sliding the specimen rack on the table 102 from the conveyance start position 103a to the transport end position 103b. The handler configures holding sections at two positions, on the side of the conveyance start position 103a and on the side of the transport end position 103b. The holding section on the side of the conveyance start position 103a is configured by the protrusion 104a of the arm member 104 and the protrusion 106a of the arm member 106, and the holding section on the side of the transport end position 103b is configured by the protrusion 104b of the arm member 104 and the protrusion 106b of the arm member 106.

In the following, the arm member 104 and the arm member 106 will be collectively referred to as "handler 104, 106", the holding section, of the handler 104, 106, on the side of the conveyance start position 103a as "first holding section 104a, 106a", and the holding section on the side of the transport end position 103b as "second holding section 104b, 106b".

The first holding section 104a, 106a sandwiches the specimen rack from both sides at end portions of the handler 104, 106 on the side of the conveyance start position 103a to thereby fit the protrusion 104a in the recess on one side surface of the specimen rack and to support the opposite rear surface of the specimen rack by the protrusion 106a. The second holding section 104b, 106b sandwiches the specimen rack from both sides at the end portions of the arm members 104, 106 on the side of the conveyance start position 103b to thereby fit the protrusion 104b in the recess on one side surface of the specimen rack and to support the opposite rear surface of the specimen rack by the protrusion 106b. The handler 104, 106 holds and moves the specimen rack in the X-direction, and transports the specimen rack by sliding the specimen rack on the table 102.

A guide rail 108, which is fitted in a groove on a side surface of the specimen rack sliding on the table 102 and which prevents the specimen rack from falling over, is provided at a side edge portion of the table 102, on the side of the arm member 106.

The first sensor 110 for detecting the specimen rack reaching the conveyance start position 103a is provided at a side of the conveyance start position 103a. The second sensor 112 for detecting the specimen rack reaching the transport end position 103b is provided at a side of the transport end position 103b.

A stopper 114 is provided near the conveyance start position 103a, and the specimen rack 20 conveyed by the conveyor belt 7a is stopped at the conveyance start position 103a. The stopper 114 stops the specimen rack 20 at the conveyance start position 103a until immediately before the specimen rack 20 is held by the handler 104, 106, and the stopper 114 is released when the handler 104, 106 holds the specimen rack 20 and starts transporting the specimen rack 20.

A circuit board 116 is provided at a side portion of the base 118. The circuit board 116 is the transport control section 101 for controlling the operation of the handler 104, 106. The first sensor 110 and the second sensor 112 are connected to the circuit board 116 by wires, and detection signals of the sensors are thereby captured by the circuit board 116. The circuit board 116 starts the transport operation for the specimen rack based on a detection signal obtained at the time of detection of arrival of the specimen rack by the first sensor 110.

The circuit board 116 is connected to the control device 34, and detection signals of the first sensor 110 and the second sensor 112 are captured by the control device 34 through the circuit board 116, and the transport state of the specimen rack at the specimen transport device 12 is managed by the control device 34.

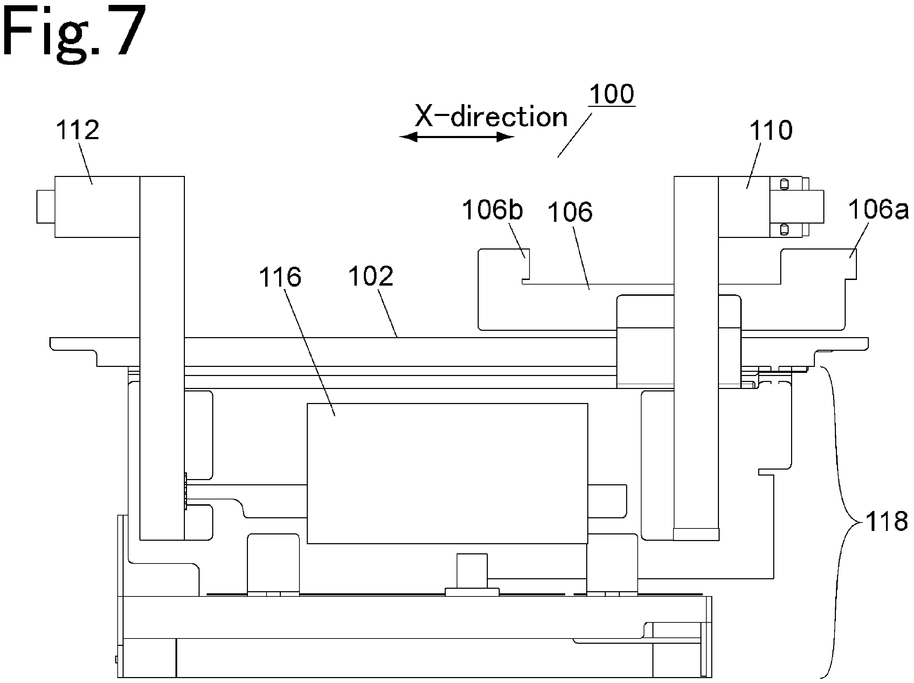

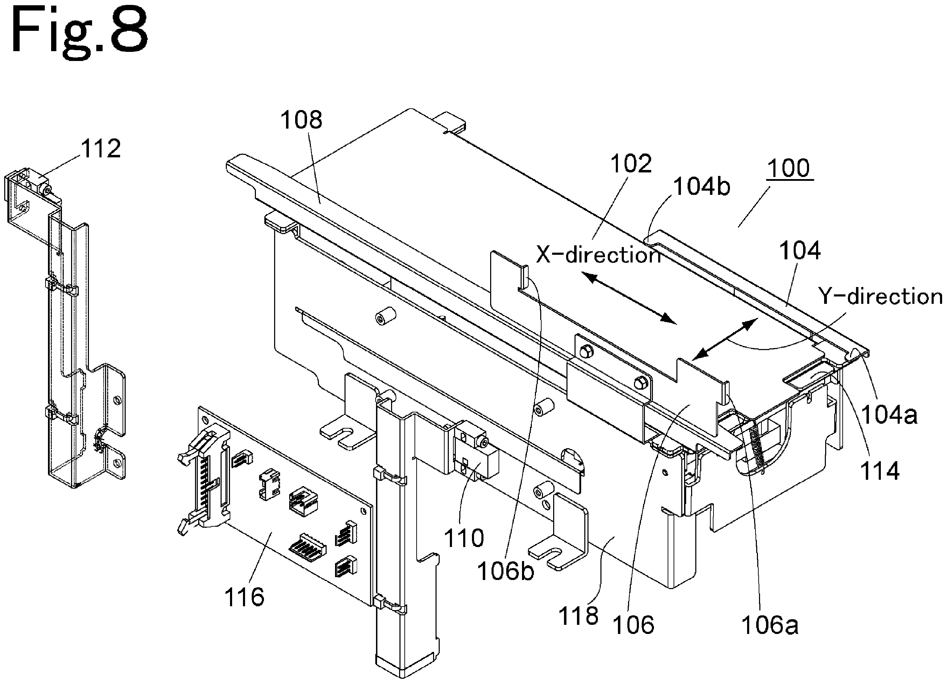

Additionally, wires and modules mounted on the circuit board 116 are omitted from Fig. 7. Fig. 8 shows some of the modules mounted on the circuit board 116, but does not show the wires.

### DESCRIPTION OF REFERENCE SIGNS

1: Automatic analysis system
2a, 2b: Automatic analysis device
4a, 4b: Analysis operation section
6a, 6b: Conveying section
7a, 7b: Conveyor belt
8a, 8b: Specimen rack placement section
9a, 9b: Specimen rack introduction section
10a, 10b: Specimen rack recovery section
12: Specimen transport device
14: Shielding cover
15a, 15b: Power switch
18a, 18b: Specimen introduction mechanism
20: Specimen rack
22a, 22b: Reagent installation section
24a, 24b: Specimen rack housing section
26a, 26b: Measurement section
32a, 32b: Analysis control section
33a, 33b: Power supply device
34: Control device
35: Analysis item assignment means
36: Analysis item display means
37: Analysis item setting means
38: Analysis item execution means
39: Mode switching means
40: Assignment information holding section
42: Non-operating device suspending means
44: Information display section
100: Transport mechanism
101a: X-direction drive motor
101b: Y-direction drive motor
102: Table
103a: Conveyance start position
103b: Conveyance end position
104, 106: Arm member (handler)
104a, 104b, 106a, 106b: Protrusion (holding section)
108: Guide rail
110: First sensor
112: Second sensor
114: Stopper
116: Circuit board (control section)
116a: Motor driver
118: Base

## Claims

1. An automatic analysis system (1) comprising:
an analysis device group including a plurality of automatic analysis devices (2a, 2b), wherein the plurality of automatic analysis devices are arranged side by side to each other in one direction on a horizontal plane and are each including:
a conveying section (7a, 7b) for conveying a specimen container containing a specimen,
a reagent table on which a plurality of reagent containers containing reagents are to be installed,
an analysis operation section (4a, 4b) for collecting a specimen from a specimen container conveyed by the conveying section (7a, 7b) to a predetermined position, and for performing analysis on the specimen according to an analysis item by adding a reagent, among reagents installed on the reagent table, to the specimen,
a power supply device (33a, 33b) for supplying necessary power to the conveying section (7a, 7b) and the analysis operation section (4a, 4b), and
an analysis control section (32a, 32b) for controlling operation of the conveying section (7a, 7b) and the analysis operation section (4a, 4b);
one or more specimen transport devices (12) configured for coupling each two automatic analysis devices (2a, 2b) adjacent to each other in the plurality of automatic analysis devices, and for transporting a specimen container between the plurality of automatic analysis devices (2a, 2b) ; **characterised in that** the automatic analysis system (1) further comprises:
mode switching means (39) configured to select in response to an input, and switch to, one of a multi-operation mode in which the automatic analysis devices (2a, 2b) that are coupled to each other by the specimen transport devices (12) are placed in an operation state such that analyses are performed by operating the plurality of the automatic analysis devices, and a single operation mode in which only one of the plurality of automatic analysis devices (2a, 2b)is placed in the operation state such that analyses are performed by operating only one of the automatic analysis devices;
an assignment information holding section (40) configured to hold analysis item assignment information to be assigned according to said input to each automatic analysis device (2a, 2b) as a said analysis item to be performed by each of the automatic analysis devices (2a, 2b) in the analysis device group in each of the multi-operation mode and the single operation mode;
analysis item setting means (37) configured to set mutually different analysis items to the automatic analysis devices respectively to be performed in the multi-operation mode and to set mutually common analysis items to the automatic analysis devices respectively to be performed in the single operation mode such that, in each of the modes, an analysis item, among analysis items assigned to each of the automatic analysis devices (2a, 2b), as an analysis item to be performed on an analysis target specimen, based on the analysis item assignment information held in the assignment information holding section (40); and
analysis item execution means (38) configured to supply information about the analysis item set by the analysis item setting means (37) to the analysis control section (32a, 32b) of each automatic analysis device (2a, 2b), and for causing the analysis item to be performed on a specimen on which the analysis item is to be performed.

2. The automatic analysis system (1) according to claim 1, wherein an analysis item which is performed by a first automatic analysis device (2a) in the multi-operation mode is performed by a second automatic analysis device (2b) in the single operation mode, and
wherein the first automatic analysis device (2a) is placed in a suspended state in the single operation mode.

3. The automatic analysis system (1) according to claim 1 or 2, comprising a system control section (34) that is electrically connected to the analysis control section (32a, 32b) of each of the automatic analysis devices (2a, 2b), and that is configured to manage operation of each of the automatic analysis devices (2a, 2b),
wherein the mode switching means (39), the assignment information holding section (40), and the analysis item execution means (38) are provided to the system control section (34).

4. The automatic analysis system (1) according to claim 2 or 3, further comprising an information display section (44) that is electrically connected to the system control section (34), and that displays information output from the system control section (34),
wherein the mode switching means (39) is configured to display, on the information display section (44), a mode selection screen urging an operator to select one of the multi-operation mode and the single operation mode, and enable the operator to select one of the multi-operation mode and the single operation mode on the mode selection screen.

5. The automatic analysis system (1) according to any one of claims 2 to 4,
wherein the analysis control section (32a, 32b) of each of the automatic analysis devices is also configured to control supply of power from the power supply device (33a, 33b) to the conveying section (7a, 7b) and the analysis operation section (4a, 4b), and
wherein the system control section (34) further includes non-operating device suspending means (42) configured to supply a signal for placing an automatic analysis device (2a, 2b), other than an automatic analysis device that is to be placed in the operation state, in a suspended state in which supply of power from the power supply device (33a, 33b) to the conveying section (7a, 7b) and the analysis operation section (4a, 4b) is cut off.

6. The automatic analysis system (1) according to any one of claims 1 to 5,
wherein the conveying section (7a, 7b) provided to each of the automatic analysis devices is a conveyor belt that includes a beginning and an end, and that is configured to convey a specimen container in one direction from a beginning side to an end side,
wherein two automatic analysis devices (2a, 2b) that are adjacent to each other are arranged in such a way that the end of the conveyor belt of one automatic analysis device is close to and faces the beginning of the conveyor belt provided to other automatic analysis device, and
wherein the specimen transport device (12) includes a transport mechanism that is arranged between the conveyor belts of the two automatic analysis devices (2a, 2b) that are adjacent to each other, and that is configured to hold a specimen container that reached the end of one conveyor belt and to transport the specimen container to the beginning of other conveyor belt.

## Patentansprüche

1. Automatisches Analysesystem (1), umfassend:
eine Analysevorrichtungsgruppe, umfassend eine Vielzahl von automatischen Analysevorrichtungen (2a, 2b), wobei die Vielzahl von automatischen Analysevorrichtungen in einer Richtung auf einer horizontalen Ebene Seite an Seite angeordnet sind und jeweils Folgendes umfassen:
einen Förderabschnitt (7a, 7b) zum Befördern eines Probenbehälters, der eine Probe enthält,
einen Reagenzientisch, auf dem eine Vielzahl von Reagenzienbehältern, die Reagenzien enthalten, zu installieren sind,
einen Analysebetriebsabschnitt (4a, 4b) zum Entnehmen einer Probe aus einem Probenbehälter, der durch den Förderabschnitt (7a, 7b) zu einer vorbestimmten Position befördert wird, und zum Durchführen einer Analyse an der Probe entsprechend einem Analysebaustein durch Zusetzen eines Reagens aus auf dem Tisch installierten Reagenzien zur Probe,
eine Leistungszufuhrvorrichtung (33a, 33b) zum Zuführen von erforderlicher Leistung zum Förderabschnitt (7a, 7b) und zum Analysebetriebsabschnitt (4a, 4b) und
einen Analysesteuerabschnitt (32a, 32b) zum Steuern des Betriebs des Förderabschnitts (7a, 7b) und des Analysebetriebsabschnitts (4a, 4b);
eine oder mehrere Probentransportvorrichtungen (12), die dazu ausgelegt sind, jeweils zwei benachbarte automatische Analysevorrichtungen (2a, 2b) der Vielzahl von automatischen Analysevorrichtungen miteinander zu koppeln und einen Probenbehälter zwischen der Vielzahl von automatischen Analysevorrichtungen (2a, 2b) zu transportieren; **dadurch gekennzeichnet, dass** das automatische Analysesystem (1) ferner Folgendes umfasst:
ein Modusumschaltmittel (39), das dazu ausgelegt ist, als Antwort auf eine Eingabe einen aus einem Mehrfachbetriebsmodus, in dem die automatischen Analysevorrichtungen (2a, 2b), welche durch die Probentransportvorrichtungen (12) miteinander gekoppelt sind, in einen Betriebszustand versetzt werden, sodass durch Betreiben der Vielzahl von automatischen Analysevorrichtungen Analysen durchgeführt werden, und einem Einfachbetriebsmodus, in dem nur eine aus der Vielzahl von automatischen Analysevorrichtungen (2a, 2b) in den Betriebszustand versetzt wird, sodass durch Betreiben nur einer der automatischen Analysevorrichtungen Analysen durchgeführt werden, auszuwählen und auf diesen umzuschalten;
einen Zuweisungsinformationenhalteabschnitt (40), der dazu ausgelegt ist, Analysebausteinzuweisungsinformationen zu speichern, die entsprechend der Eingabe jeder automatischen Analysevorrichtung (2a, 2b) als Analysebaustein zuzuweisen sind, welcher von jeder der automatischen Analysevorrichtungen (2a, 2b) in der Analysevorrichtungsgruppe in jedem aus dem Mehrfachbetriebsmodus und dem Einfachbetriebsmodus durchzuführen ist;
ein Analysebausteineinstellungsmittel (37), das dazu ausgelegt ist, für die jeweiligen automatischen Analysevorrichtungen unterschiedliche Analysebausteine einzustellen, welche im Mehrfachbetriebsmodus durchzuführen sind, und für die jeweiligen automatischen Analysevorrichtungen gleiche Analysebausteine einzustellen, welche im Einfachbetriebsmodus durchzuführen sind, sodass in jedem der Modi jeder der automatischen Analysevorrichtungen (2a, 2b) ein Analysebaustein aus Analysebausteinen als Analysebaustein, der an einer Analysezielprobe durchzuführen ist, beruhend auf den im Zuweisungsinformationenhalteabschnitt (40) gespeicherten Analysebausteinzuweisungsinformationen zugewiesen wird; und
ein Analysebausteinausführungsmittel (38), das dazu ausgelegt ist, Informationen über den Analysebaustein, der durch das Analysebausteineinstellungsmittel (37) eingestellt wurde, dem Analysesteuerabschnitt (32a, 32b) jeder automatischen Analysevorrichtung (2a, 2b) zuzuführen und zu bewirken, dass der Analysebaustein an einer Probe durchgeführt wird, auf der der Analysebaustein durchzuführen ist.

2. Automatisches Analysesystem (1) nach Anspruch 1, wobei ein Analysebaustein, der durch eine erste automatische Analysevorrichtung (2a) im Mehrfachbetriebsmodus durchgeführt wird, durch eine zweite automatische Analysevorrichtung (2b) im Einfachbetriebsmodus durchgeführt wird, und
wobei die erste automatische Analysevorrichtung (2a) im Einfachbetriebsmodus in einem suspendierten Zustand angeordnet ist.

3. Automatisches Analysesystem (1) nach Anspruch 1 oder 2, umfassend einen Systemsteuerungsabschnitt (34), der elektrisch mit dem Analysesteuerabschnitt (32a, 32b) von jeder der automatischen Analysevorrichtungen (2a, 2b) verbunden ist und dazu ausgelegt ist, den Betrieb von jeder der automatischen Analysevorrichtungen (2a, 2b) zu verwalten,
wobei das Modusumschaltmittel (39), der Zuweisungsinformationshalteabschnitt (40) und das Analysebausteinausführungsmittel (38) für den Systemsteuerabschnitt (34) bereitgestellt sind.

4. Automatisches Analysesystem (1) nach Anspruch 2 oder 3, ferner umfassend einen Informationsanzeigeabschnitt (44), der elektrisch mit dem Systemsteuerabschnitt (34) verbunden ist und Informationen, die vom Systemsteuerabschnitt (34) ausgegeben werden, anzeigt,
wobei das Modusumschaltmittel (39) dazu ausgelegt ist, auf dem Informationsanzeigeabschnitt (44) einen Modusauswahlbildschirm anzuzeigen, der einen Bediener auffordert, einen aus dem Mehrfachbetriebsmodus und dem Einfachbetriebsmodus auszuwählen, und es dem Bediener ermöglicht, auf dem Modusauswahlbildschirm eines aus dem Mehrfachbetriebsmodus und dem Einfachbetriebsmodus auszuwählen.

5. Automatisches Analysesystem (1) nach einem der Ansprüche 2 bis 4,
wobei der Analysesteuerabschnitt (32a, 32b) von jeder der automatischen Analysevorrichtungen auch dazu ausgelegt ist, die Zufuhr von Leistung von der Leistungszufuhrvorrichtung (33a, 33b) zum Förderabschnitt (7a, 7b) und zum Analysebetriebsabschnitt (4a, 4b) zu steuern, und
wobei der Systemsteuerabschnitt (34) ferner ein Nicht-arbeitende-Vorrichtung-Suspendierungsmittel (42) umfasst, das dazu ausgelegt ist, ein Signal zuzuführen, um eine andere automatische Analysevorrichtung (2a, 2b) als eine automatische Analysevorrichtung, die in den Betriebszustand zu versetzen ist, in einen suspendierten Zustand zu versetzen, in dem die Zufuhr von Leistung von der Leistungsversorgungsvorrichtung (33a, 33b) für den Förderabschnitt (7a, 7b) und den Analysebetriebsabschnitt (4a, 4b) unterbrochen wird.

6. Automatisches Analysesystem (1) nach einem der Ansprüche 1 bis 5,
wobei der für jede von den automatischen Analysevorrichtungen bereitgestellte Förderabschnitt (7a, 7b) ein Förderband ist, das einen Anfang und ein Ende umfasst und dazu ausgelegt ist, einen Probenbehälter in einer Richtung von einer Anfangsseite zu einer Endseite zu befördern,
wobei zwei automatische Analysevorrichtungen (2a, 2b), die zueinander benachbart sind, so angeordnet sind, dass das Ende des Förderbands von einer automatischen Analysevorrichtung sich in der Nähe des Anfangs eines für andere automatische Analysevorrichtungen bereitgestellten Förderbands befindet und diesem zugewandt ist, und
wobei die Probentransportvorrichtung (12) einen Transportmechanismus umfasst, der zwischen den Förderbändern der zwei automatischen Analysevorrichtungen (2a, 2b), die zueinander benachbart sind, angeordnet ist und dazu ausgelegt ist, einen Probenbehälter, der das Ende eines Förderbands erreicht hat, zu halten und den Probenbehälter zum Anfang eines anderen Förderbands zu transportieren.

## Revendications

1. Système d'analyse automatique (1), comprenant :
un groupe de dispositifs d'analyse incluant une pluralité de dispositifs d'analyse automatiques (2a, 2b), dans lequel la pluralité de dispositifs d'analyse automatiques sont agencés côte à côte dans une direction sur un plan horizontal et incluent chacun :
une section de transport (7a, 7b) transportant un récipient de spécimen contenant un spécimen,
une table de réactifs sur laquelle une pluralité de récipients de réactif contenant des réactifs doivent être installés,
une section d'opération d'analyse (4a, 4b) pour collecter un spécimen à partir d'un récipient de spécimen transporté par la section de transport (7a, 7b) vers une position prédéterminée, et pour exécuter une analyse sur le spécimen selon un élément d'analyse en ajoutant un réactif, parmi des réactifs installés sur la table de réactifs, au spécimen,
un dispositif de fourniture de puissance (33a, 33b) pour fournir la puissance nécessaire à la section de transport (7a, 7b) et à la section d'opération d'analyse (4a, 4b), et
une section de commande d'analyse (32a, 32b) pour commander le fonctionnement de la section de transport (7a, 7b) et de la section d'opération d'analyse (4a, 4b) ;
un ou plusieurs dispositifs de transport de spécimen (12) configurés pour coupler chacun de deux dispositifs d'analyse automatiques (2a, 2b) adjacents l'un à l'autre dans la pluralité de dispositifs d'analyse automatiques, et pour transporter un récipient de spécimen entre la pluralité de dispositifs d'analyse automatiques (2a, 2b) ; **caractérisé en ce que** le système d'analyse automatique (1) comprend en outre :
des moyens de commutation de mode (39) configurés pour sélectionner en réponse à une entrée, et commuter vers, l'un d'un mode multi-fonctionnel dans lequel les dispositifs d'analyse automatiques (2a, 2b) qui sont couplés les uns aux autres par les dispositifs de transport de spécimen (12) sont placés dans un état de fonctionnement tel que des analyses sont effectuées en faisant fonctionner la pluralité des dispositifs d'analyse automatiques, et un mode de fonctionnement unique dans lequel un seul de la pluralité de dispositifs d'analyse automatiques (2a, 2b) est placé dans l'état de fonctionnement tel que des analyses sont effectuées en faisant fonctionner un seul des dispositifs d'analyse automatiques ;
une section de conservation d'informations d'affectation (40) configurée pour conserver des informations d'affectation d'élément d'analyse à affecter en fonction de ladite entrée à chaque dispositif d'analyse automatique (2a, 2b) en tant que dit élément d'analyse à effectuer par chacun des dispositifs d'analyse automatiques (2a, 2b) dans le groupe de dispositifs d'analyse dans chacun du mode multi-fonctionnel et du mode de fonctionnement unique ;
des moyens de réglage d'élément d'analyse (37) configurés pour régler des éléments d'analyse mutuellement différents par rapport aux dispositifs d'analyse automatiques respectivement à effectuer dans le mode multi-fonctionnel, et pour régler des éléments d'analyse mutuellement communs aux dispositifs d'analyse automatiques à effectuer respectivement dans le mode de fonctionnement unique de sorte que, dans chacun des modes, un élément d'analyse, parmi des éléments d'analyse affectés à chacun des dispositifs d'analyse automatiques (2a, 2b), en tant qu'élément d'analyse à effectuer sur un spécimen cible d'analyse, sur la base des informations d'affectation d'élément d'analyse conservées dans la section de conservation d'informations d'affectation (40) ; et
des moyens d'exécution d'élément d'analyse (38) configurés pour fournir des informations sur l'élément d'analyse réglé par les moyens de réglage d'élément d'analyse (37) à la section de commande d'analyse (32a, 32b) de chaque dispositif d'analyse automatique (2a, 2b), et pour amener l'élément d'analyse à être effectué sur un spécimen sur lequel l'élément d'analyse doit être effectué.

2. Système d'analyse automatique (1) selon la revendication 1, dans lequel un élément d'analyse qui est effectué par un premier dispositif d'analyse automatique (2a) dans le mode multi-fonctionnel est effectué par un second dispositif d'analyse automatique (2b) dans le mode de fonctionnement unique, et
dans lequel le premier dispositif d'analyse automatique (2a) est placé dans un état suspendu dans le mode de fonctionnement unique.

3. Système d'analyse automatique (1) selon la revendication 1 ou 2, comprenant une section de commande de système (34) qui est connectée électriquement à la section de commande d'analyse (32a, 32b) de chacun des dispositifs d'analyse automatiques (2a, 2b), et qui est configurée pour gérer le fonctionnement de chacun des dispositifs d'analyse automatiques (2a, 2b),
dans lequel les moyens de commutation de mode (39), la section de conservation d'informations d'affectation (40) et les moyens d'exécution d'élément d'analyse (38) sont fournis à la section de commande de système (34).

4. Système d'analyse automatique (1) selon la revendication 2 ou 3, comprenant en outre une section d'affichage d'informations (44) qui est connectée électriquement à la section de commande de système (34), et qui affiche des informations en sortie de la section de commande de système (34),
dans lequel les moyens de commutation de mode (39) sont configurés pour afficher, sur la section d'affichage d'informations (44), un écran de sélection de mode exhortant un opérateur à sélectionner l'un du mode multi-fonctionnel et du mode de fonctionnement unique, et permettre à l'opérateur de sélectionner l'un du mode multi-fonctionnel et du mode de fonctionnement unique sur l'écran de sélection de mode.

5. Système d'analyse automatique (1) selon l'une quelconque des revendications 2 à 4,
dans lequel la section de commande d'analyse (32a, 32b) de chacun des dispositifs d'analyse automatique est également configurée pour commander la fourniture de puissance à partir du dispositif de fourniture de puissance (33a, 33b) vers la section de transport (7a, 7b) et la section d'opération d'analyse (4a, 4b), et dans lequel la section de commande de système (34) inclut en outre des moyens de suspension de dispositif non fonctionnel (42) configuré pour fournir un signal pour placer un dispositif d'analyse automatique (2a, 2b), autre qu'un dispositif d'analyse automatique qui doit être placé dans l'état de fonctionnement, dans un état suspendu dans lequel la fourniture de puissance à partir du dispositif de fourniture de puissance (33a, 33b) vers la section de transport (7a, 7b) et vers la section d'opération d'analyse (4a, 4b) est coupée.

6. Système d'analyse automatique (1) selon l'une quelconque des revendications 1 à 5,
dans lequel la section de transport (7a, 7b) fournie à chacun des dispositifs d'analyse automatique est une bande transporteuse qui comprend un début et une fin, et qui est configurée pour transporter un récipient de spécimen dans une direction d'un côté de début à un côté de fin,
dans lequel deux dispositifs d'analyse automatique (2a, 2b) qui sont adjacents l'un à l'autre sont agencés de telle sorte que l'extrémité de la bande transporteuse d'un dispositif d'analyse automatique est proche de et orientée vers le début de la bande transporteuse fournie à un autre dispositif d'analyse automatique, et
dans lequel le dispositif de transport de spécimen (12) inclut un mécanisme de transport qui est agencé entre les bandes transporteuses des deux dispositifs d'analyse automatiques (2a, 2b) qui sont adjacents l'un à l'autre, et qui est configuré pour maintenir un récipient de spécimen qui a atteint l'extrémité d'une bande transporteuse et pour transporter le récipient de spécimen au début d'une autre bande transporteuse.
